Europäisches Patentamt

European Patent Office

Office européen des brevets

(11) Veröffentlichungsnummer: **0 311 922 B1**

(12) **EUROPÄISCHE PATENTSCHRIFT**

(45) Veröffentlichungstag der Patentschrift: **23.12.92**

(21) Anmeldenummer: **88116627.6**

(22) Anmeldetag: **07.10.88**

(51) Int. Cl.⁵: **G11B 15/675**, G11B 15/10

(54) Mechanische Haltevorrichtung für die Antriebsplatte in einem Cassettenrecorder.

(30) Priorität: **13.10.87 DE 3734606**

(43) Veröffentlichungstag der Anmeldung:
**19.04.89 Patentblatt 89/16**

(45) Bekanntmachung des Hinweises auf die
Patenterteilung:
**23.12.92 Patentblatt 92/52**

(84) Benannte Vertragsstaaten:
**DE ES FR GB IT SE**

(56) Entgegenhaltungen:
**FR-A- 1 278 766**
**FR-A- 2 304 144**
**US-A- 4 087 841**
**US-A- 4 224 650**

(73) Patentinhaber: **Blaupunkt-Werke GmbH**
**Robert-Bosch-Strasse 200**
**W-3200 Hildesheim(DE)**

(72) Erfinder: **Birth, Gerhard**
**Dethmarstrasse 25**
**W-3200 Hildesheim(DE)**
Erfinder: **Felten, Gerold**
**Hainholz 52**
**W-3202 Bad Salzdetfurth(DE)**

(74) Vertreter: **Eilers, Norbert, Dipl.-Phys.**
**Blaupunkt-Werke GmbH Robert-**
**Bosch-Strasse 200**
**W-3200 Hildesheim(DE)**

**Beschreibung**

Die Erfindung betrifft eine mechanische Haltevorrichtung für die Antriebsplatte in einem Cassettenrecorder gemäß dem Oberbegriff des Patentanspruchs 1.

Bei Cassettenrecordern, und insbesondere bei Cassettenrecordern für den Einsatz in Kraftfahrzeugen (meistens in Kombination mit dem Autoradio), ist eine Konstruktion üblich, bei welcher sich der Cassettenrecorder unmittelbar nach dem Einschieben einer Cassette in den Cassettenschacht in seiner Wiedergabestellung befindet, d.h., anders als bei Cassettenrecordern für den Heimgebrauch ist es nicht erforderlich, nach dem Einlegen der Cassette noch eine besondere Wiedergabetaste zu betätigen. Dabei ist die Antriebsplatte, welche den kompletten Antrieb für die Cassette umfaßt, in üblicher Weise als Platinenlift bewegbar ausgebildet, so daß die Cassette unmittelbar nach ihrem Einschieben abgespielt werden kann umd die Antriebsplatte die dazugehörige Wiedergabestellung einnimmt.

Durch den Verzicht auf eine besondere Wiedergabetaste wird die Bedienung des Cassettenrecorders vereinfacht, was sich insbesondere für den in seiner Aufmerksamkeit durch den Verkehr beanspruchten Autofahrer vorteilhaft bei einem im Kraftfahrzeug befindlichen Cassettenrecorder auswirkt. Bei den bekannten Cassettenrecordern ist ferner auch vorgesehen, daß die Cassette nach dem Abschalten der Betriebsspannung automatisch ausgeworfen wird, ohne daß es erforderlich ist, eine besondere Auswurftaste zu betätigen.

Diese ursprünglich als weitere Erhöhung des Bedienungskomforts gedachte Maßnahme hat sich in der Praxis aber nicht vollständig bewähren können. Es ist nämlich erforderlich, beim Wiedereinschalten der Betriebsspannung - wenn beispielsweise das Kraftfahrzeug gestartet wird - die Cassette erneut von Hand einzuschieben, um die Cassette abhören zu können. Dies wird von dem Benutzer häufig als lästig empfunden, und es besteht daher der Wunsch nach einer Haltevorrichtung, die dafür sorgt, daß die Cassette nach dem Abschalten der Betriebsspannung nicht ausgeworfen wird, sondern in einer solchen Spielstellung bleibt, die gewährleistet, daß nach dem Einschalten der Betriebsspannung sofort die Wiedergabe erfolgen kann.

Die erwähnte Spielstellung ist dabei nicht mit der Wiedergabestellung zu verwechseln. Die Cassette behält in der Spielstellung zwar ihre ursprüngliche Stellung bei, befindet sich also mechanisch gesehen in der Wiedergabestellung, allerdings wird der Antriebsmotor in der Spielstellung abgeschaltet.

Es ist schon bekannt, die Antriebsplatte bei einem Cassettenrecorder dadurch in der Wiedergabestellung zu halten, daß die Spule eines Haltemagneten von einem Strom durchflossen wird, wodurch ein Magnetanker auf eine Haltewippe einwirkt, durch welche die Antriebsplatte so lange in ihrer Wiedergabestellung gehalten wird, wie die Magnetspule des Haltemagneten von Strom durchflossen wird. Dabei wirkt die Kraft des Haltemagneten der Kraft von Auswurffedern entgegen.

Wenn bei dieser bekannten Anordnung die Betriebsspannung abgeschaltet und daher die Spule des Haltemagneten nicht mehr von Strom durchflossen wird, bewirken die Auswurffedern, daß die Cassette automatisch ausgeworfen wird. Um hier dem geschilderten Wunsch nachzukommen, daß die Cassette auch nach dem Abschalten der Betriebsspannung in einer Spielposition bleibt und nicht ausgeworfen wird, ist es im Prinzip möglich, die Spule des Haltemagneten weiterhin an die Stromquelle angeschlossen zu lassen. Allerdings haften dieser Lösung gravierende Nachteile an. So erfordert die Spule des Haltemagneten einen großen Energiebedarf, und außerdem muß die Spule für einen langen Dauerbetrieb ausgelegt sein, um eine Überhitzung mit der Folge einer Brandgefahr zu vermeiden. Eine dieser Gefahr entgegenwirkende und groß ausgelegte Spule ist andererseits sehr teuer und erfordert einen beachtlichen Platzbedarf, was bei der angestrebten Kompaktheit hinderlich ist.

Hier greift die Erfindung ein, der die Aufgabe zugrunde liegt, bei einem Cassettenrecorder eine mechanische Haltevorrichtung zu schaffen, die es bei einfachem und preisgünstigem Aufbau ermöglicht, daß die Cassette nach dem Abschalten der Betriebsspannung nicht ausgeworfen wird, sondern in einer Spielstellung bleibt, so daß nach dem Wiedereinschalten der Betriebsspannung sofort die Wiedergabestellung eingenommen ist. Ein Auswurf der Cassette soll nur durch besondere Betätigung erfolgen.

Dieses Ziel erreicht die Erfindung bei der im Oberbegriff des Anspruchs 1 angegebenen mechanischen Haltevorrichtung durch die im kennzeichnenden Teil angeführten Merkmale.

Während beim eingangs geschilderten Stand der Technik die Beibehaltung - also die Verriegelung - der Antriebsplatte durch die Kraft eines Haltemagneten erfolgt, beschreitet die Erfindung den neuen Weg, mit Hilfe einer verschwenkbaren Ankerwippe eine mechanische Verriegelung vorzusehen, d.h., nach dem Abschalten der Betriebsspannung wird die Cassette nicht ausgeworfen, sondern verbleibt in einer Spielstellung.

Die Ankerwippe ist in zweckmäßiger Ausgestaltung der Erfindung durch die Einwirkung eines Impulsmagneten in ihre Auslöseposition bringbar, in welcher die Cassette ausgeworfen wird, wobei dieses Auswerfen nicht zwangsläufig nach dem Abschalten der Betriebsspannung, sondern nur dann erfolgt, wenn der Benutzer dies wünscht und der Impulsmagnet kurzzeitig zum Auslösen der Ankerwippe mit einem Impuls beaufschlagt wird.

Die Erfindung sieht also in neuartiger Weise eine Umkehr der Magnetfunktion vor. Während bei der bekannten Lösung die Ankerplatte so lange in der Wiedergabestellung gehalten wird, wie die Spule des Haltemagneten von Strom durchflossen wird, wobei die Antriebsplatte durch den Mangneten in der Wiedergabestellung gehalten wird, ist die Antriebsplatte bei der Erfindung mechanisch verriegelt und in einer Spielstellung gehalten, ohne daß der Mangnet von Strom durchflossen wird. Die mechanische Entriegelung erfolgt, wenn der Impulsmagnet betätigt wird, d.h., der Impulsmagnet wird hier nicht zum Verriegeln, sondern zum Entriegeln benutzt. Der Impulsmagnet wird somit nicht im Dauerbetrieb verwendet und kann daher entsprechend platzsparend und auch kostengünstig ausgelegt werden, da er nicht zum Halten der Antriebsplatte, sondern zu deren Freigabe ausgenutzt wird.

Weitere zweckmäßige Ausgestaltungen und vorteilhafte Weiterbildungen der Erfindung erbeben sich aus den Unteransprüchen, der Beschreibung und der Zeichnung.

Nachfolgend wird die Erfindung an Hand des in der Zeichnung dargestellten Ausführungsbeispiels zum besseren Verständnis näher erläutert. Es zeigen:

Fig. 1     eine bekannte Haltevorrichtung, bei der die Cassette nach dem Abschalten der Betriebsspannung zwangsläufig ausgeworfen wird, und

Fig. 2     eine erfindungsgemäße mechanische Haltevorrichtung, bei der eine Cassette nach dem Abschalten der Betriebsspannung in einer Spielstellung verbleibt.

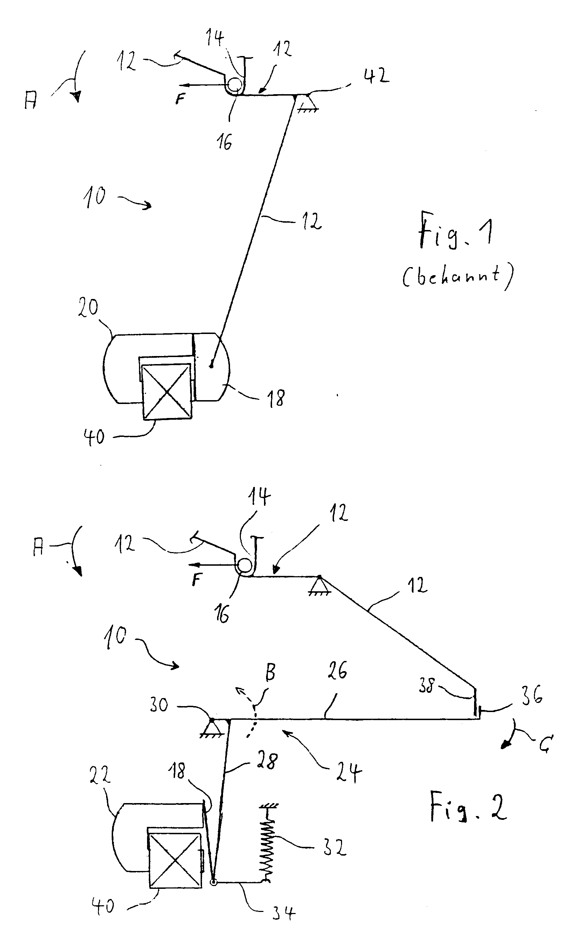

Zur näheren Verdeutlichung der Erfindung und ihrer Vorteile wird nachfolgend an Hand von Fig. 1 zunächst eine bekannte Haltevorrichtung 10 beschrieben, wie sie in Cassettenrecordern üblich ist.

Die Haltevorrichtung 10 umfaßt eine Haltewippe 12, die sich in der zeichnerischen Darstellung gemäß Fig. 1 in einer Wiedergabepostition befindet, in welcher eine nicht näher gezeigte Antriebsplatte mit einer zugehörigen Cassette die Wiedergabeposition einnimmt. Die um einen ortsfesten Punkt 42 verschwenkbare Haltewippe 12 ist mit ihrem einen Schenkel mit einem Mangnetanker 18 eines Haltemagneten 20 verbunden. Der Magnetanker 18 wird von dem Haltemagneten 20 angezogen, solange durch eine Spule 40 Strom fließt. Ferner umfaßt die nur schematisch dargestellte Haltewippe 12 eine Nut 14, in die ein Haltestift 16 eingreift. Der Haltestift 14 steht unter der Einwirkung einer durch den Pfeil F angedeuteten Kraft einer nicht näher dargestellten Auswurffeder. Diese Kraft F kann aber nicht wirksam werden, solange die Spule 40 von Strom durchflossen und der Magnetanker 18 angezogen ist.

Wenn die Betriebsspannung abgeschaltet und somit der Stromfluß durch die Spule 40 unterbrochen wird, kommt die Federkraft F zur Wirkung. Der Magnetanker 18 hebt ab und die Haltewippe 12 führt eine durch den Pfeil A angedeutete Schwenkbewegung durch. Die Cassette wird nunmehr durch die Auswurffedern ausgeworfen (sogenannte "Key-off-Eject"-Lösung).

Demgegenüber zeichnet sich die in Fig. 2 beispielhaft dargestellte mechanische Haltevorrichtung dadurch aus, daß die Cassette nach dem Abschalten der Betriebsspannung nicht ausgeworfen und die Antriebsplatte eine Spielposition einnimmt, die praktisch der Wiedergabestellung entspricht; lediglich der Antriebsmotor ist abgeschaltet.

Bei der neuen mechanischen Haltevorrichtung gemäß Fig. 2 - in der einander entsprechende Teile aus Fig. 1 mit gleichen Bezugszeichen versehen sind - ist als Betätigungselement für die Haltewippe 12 eine Ankerwippe 24 vorgesehen. Die Ankerwippe 24 ist um einen ortsfesten Punkt 30 verschwenkbar und besitzt einen ersten Schenkel 26 sowie einen zweiten Schenkel 28.

Der zweite Schenkel 28 ist über den Magnetanker, der aus den beiden Schenkeln 18 und 34 besteht, mit einer Zugfeder 32 verbunden, wobei der magnetisch wirksame Schenkel 18 des Magnetankers mit seinem einen Ende an dem Impulsmagneten 22 anliegt, wodurch einerseits ein geringer Luftspalt zwischen dem Magnetankerschenkel 18 und dem Impulsmagneten 22 erreicht wird, andererseits ein Drehmoment auf die Ankerwippe 24 ausgeübt wird und zwar in Richtung des gestrichelten Pfeiles B.

Der erste Schenkel 26 der Ankerwippe 24 besitzt an seinem äußeren Ende eine Umbiegung 36, die in der in Fig. 2 gezeigten Position gegen einen Endschenkel 38 der Haltewippe 12 anliegt und die Haltewippe 12 dadurch in der gezeigten Position festhält, welche die Wiedergabestellung bzw. die Spielstellung darstellt.

Durch die Zugfeder 32 wird über die Hebelarme 34 und 18 des Magnetankers auf die Ankerwippe 24 ein Drehmoment ausgeübt, welches in Richtung des gestrichelt gezeichneten Pfeiles B wirkt, d.h., die Haltewippe 12 wird in der Wiedergabestellung gehalten, und zwar - vergleichbar mit Fig. 1 - entgegen der Federkraft F. Somit befindet sich die Antriebsplatte in einer mechanisch verriegelten Wiedergabestellung, wobei der Impulsmagnet 22 stromlos ist.

Wenn aber der Impulsmagnet 22 in der in Fig. 2 gezeigten Wiedergabestellung stromlos ist, so bedeutet dies, daß die Cassette nach dem Abschalten der Betriebsspannung - anders als in Fig. 1 - nicht ausgeworfen wird. Ein Auswerfen der Cassette erfolgt vielmehr erst dann, wenn die Spule 40 des Impulsmagneten 22 mit einem Impuls beaufschlagt und der Magnetanker 18 von dem Impulsmagneten 22 unter Überwindung der Kraft der Zugfeder 32 angezogen wird. In diesem Fall verschwenkt der erste Schenkel 26 bzw. die Umbiegung 36 der Ankerwippe 24 kurzzeitig in Richtung des Pfeiles C, wodurch der Endschenkel 38 freigegeben und die Haltewippe 12 in Folge der Einwirkung der Kraft F der Auswurffedern ausgelöst wird. Der Cassettenauswurf kann also nur dann erfolgen, wenn die Ankerwippe 24 durch den Impulsmagneten 22 beeinflußt wird.

Es sei darauf hingewiesen, daß das Auslösen bzw. die Freigabe der mechanisch verriegelten Haltewippe 12 an Stelle des Impulsmagneten 22 im Rahmen der Erfindung selbstverständlich auch durch einen mechanischen Taster erfolgen kann.

Bei einem Vergleich von Fig. 1 und 2 wird noch ein weiterer Vorteil der Erfindung deutlich. Die örtliche Lage des Impulsmagneten 22 bzw. des Haltemagneten 20 einerseits und des Haltestiftes 16 und der Nut 14 andererseits können nämlich relativ zueinander identisch beibehalten werden. Daher ist es möglich, bei einem bekannten Cassettenrecorder gemäß der Lösung nach Fig. 1 ohne weiteres die gewünschte Haltevorrichtung nach Fig. 2 zu realisieren. Dabei kann die Spule 40 des Impulsmagneten 22 sogar noch preisgünstiger mit größerem Drahtdurchmesser und geringerer Windungszahl ausgelegt werden.

## Patentansprüche

1. Mechanische Haltevorrichtung für die Antriebsplatte in einem Cassettenrecorder, insbesondere in einem Cassettenrecorder für Kraftfahrzeuge, wobei die Antriebsplatte als Platinenlift bewegbar ist und nach Einschieben einer Cassette gegen die Kraft (F) einer Auswurffeder selbsttätig die Wiedergabestellung einnimmt, und wobei die Haltevorrichtung eine verschwenkbare Haltewippe (12) umfaßt, die mit einem Haltestift (16) zusammenwirkt, durch welchen die Antriebsplatte in der einen Position der Haltewippe gegen die Kraft (F) einer Auswurffeder in der Wiedergabestellung gehalten und wobei die Antriebsplatte nach Auslösen eines Betätigungselements und nach dem damit verursachten Verschwenken der Haltewippe für den Cassettenauswurf freigegeben ist, dadurch gekennzeichnet, daß das Betätigungselement durch eine um einen ortsfesten Punkt (30) verschwenkbare Ankerwippe (24) gebildet ist, daß die Ankerwippe mit einer Federkraft (32) beaufschlagt ist, welche die Ankerwippe in ihrer der Wiedergabestellung zugeordneten Normalposition hält, und daß die Ankerwippe (24) kurzzeitig entgegen der Wirkung der Federkraft in ihre Auslöseposition bringbar ist.

2. Haltevorrichtung nach Anspruch 1, dadurch gekennzeichnet, daß die Ankerwippe (24) zwei unter einem Winkel zueinander angeordnete Schenkel (26, 28) umfaßt, daß der erste Schenkel (26) mit seinem äußeren Ende in der Normalposition an der Haltewippe (12) anliegt, un daß der zweite Schenkel (28) an seinem äußeren Ende mit einer Feder (32) verbunden ist.

3. Haltevorrichtung nach Anspruch 2, dadurch gekennzeichnet, daß der zweite Schenkel (28) mit einem Magnetanker (18) eines Impulsmagneten (22) verbunden ist, durch welchen die Ankerwippe (24) ausgelöst wird.

## Claims

1. Mechanical holding device for a driving plate in a cassette recorder, in particular a cassette recorder for motor vehicles, the drive plate being movable as a lifter and, after loading of a cassette, automatically assumes the playback position against the force (F) of an ejection spring, and the holding device comprising a pivotable holding rocker (12), which interacts with a holding pin (16) by which, in the one position of the holding rocker, the drive plate is held in the playback position against the force (F) of an ejection spring and, after tripping of an actuation element and after the pivoting of the holding rocker thereby caused, the drive plate being released for cassette ejection, characterised in that the actuation element is formed by an armature rocker (24) which is pivotable about a fixed point (30), in that the armature rocker is subjected to a spring force (32), which holds the armature rocker in its normal position, assigned to the playback position, and in that the armature rocker (24) can be brought briefly into its tripping position against the action of the spring force.

2. Holding device according to Claim 1, characterised in that the armature rocker (24) comprises two legs (26, 28), arranged at an angle with respect to each other, in that, in the normal position, the first leg (26) bears with its outer end against the holding rocker (12), and in that the second leg (28) is connected at its outer end to a spring (32).

**3.** Holding device according to Claim 2, characterised in that the second leg (28) is connected to a magnet armature (18) of a pulsed magnet (22), by which the armature rocker (24) is tripped.

**Revendications**

**1.** Dispositif de maintien mécanique pour la platine d'entraînement dans un enregistreur à cassette, notamment dans un enregistreur à cassette pour véhicules automobiles, dans lequel la platine d'entraînement est susceptible de se déplacer en tant que monte-platines, et après l'introduction, contre l'action (F) d'un ressort d'éjection, de prendre automatiquement la position de reproduction, tandis que ce dispositif de maintien comprend une bascule de maintien (12) susceptible de pivoter et qui coopère avec une broche de maintien (16), grâce à laquelle la platine d'entraînement, dans l'une des positions de la bascule de maintien, est maintenue dans la position de reproduction contre l'action (F) d'un ressort d'éjection, et dans lequel la platine d'entraînement après déclenchement d'un élément d'actionnement et après le pivotement ainsi provoqué de la bascule de maintien, est libérée pour l'éjection de la cassette, dispositif de maintien mécanique caractérisé en ce que l'élément d'actionnement est constitué par une bascule d'ancrage (24) susceptible de pivoter autour d'un point fixe (30), en ce que cette bascule d'ancrage est sollicitée par l'action d'un ressort (32) qui maintient la bascule d'ancrage dans sa position normale associée à la position de reproduction, et en ce que la bascule d'ancrage (24) est susceptible d'être amenée pendant un court instant dans sa position de déclenchement contre l'action du ressort.

**2.** Dispositif de maintien selon la revendication 1, caractérisé en ce que la bascule d'ancrage (24) comprend deux branches (26, 28) disposées selon un angle l'une par rapport à l'autre, en ce que la première branche (26) s'applique par son extrémité externe dans la position normale contre la bascule de maintien (12), et en ce que la seconde branche (28) est reliée à son extrémité externe à un ressort (32).

**3.** Dispositif de maintien selon la revendication 2, caractérisé en ce que la seconde branche (28) est reliée à une armature (18) d'un électroaimant à impulsion (22) grâce auquel la bascule d'ancrage (24) est déclenchée.

Fig. 1
(bekannt)

Fig. 2